# FASCICULE DE BREVET EUROPEEN

(11) **EP 3 625 193 B1**
(45) Date de publication et mention de la délivrance du brevet: **09.06.2021**
(21) Numéro de dépôt: 18723544.5
(22) Date de dépôt: 16.05.2018
(51) Int. Cl.: C04B 41/00, C04B 41/47, C04B 41/45, C04B 38/04, C04B 35/583, C04B 35/632, C04B 41/82, C09K 5/06

(54) **MATÉRIAU THERMIQUE À HAUTE CAPACITÉ ET HAUTE CONDUCTIVITÉ, SON PROCÉDÉ DE PRÉPARATION ET LES COMPOSANTS LE COMPRENANT**
THERMISCHES MATERIAL MIT HOHER KAPAZITÄT UND HOHER LEITFÄHIGKEIT, VERFAHREN ZU DESSEN HERSTELLUNG UND VON KOMPONENTEN DAMIT
THERMAL MATERIAL WITH HIGH CAPACITY AND HIGH CONDUCTIVITY, METHOD FOR PREPARING SAME AND THE COMPONENTS THAT COMPRISE SAME

(30) Priorité: 16.05.2017 FR 1700516
(43) Date de publication de la demande: 25.03.2020
(73) Titulaire: Thales, 92400 Courbevoie (FR); Centre National de la Recherche Scientifique, 75016 Paris (FR); Nanyang Technological University, Singapore 639798 (SG); Université de Lille, 59000 Lille (FR)
(72) Inventeur: PAWLIK, Matthieu, 648558 (SG); TEO, Edwin, Hang Tong, 791448 (SG); FONCIN, Jérôme, 78995 Elancourt Cedex (FR); MERLET, Thomas, 78995 Elancourt Cedex (FR); COQUET, Philippe, 259829 (SG); LOEBLEIN, Manuela, 270041 (SG); TSANG, Tony, Siu Hon, 541325 (SG)
(74) Mandataire: Lavoix
(86) Numéro de dépôt international: PCT/EP2018/062780
(87) Numéro de publication internationale: WO 2018/210950

(56) Documents cités:
- EP-A2- 1 333 710
- CN-A- 105 733 192
- CN-A- 106 497 522
- US-A1- 2016 146 556
- Jie Yang ET AL: "An ice-templated assembly strategy to construct graphene oxide/boron nitride hybrid porous scaffolds in phase change materials with enhanced thermal conductivity and shape stability for light-thermal-electric energy conversion", Journal of Materials Chemistry A, vol. 4, no. 48, 9 November 2016 (2016-11-09), pages 18841-18851, XP055499904, GB ISSN: 2050-7488, DOI: 10.1039/C6TA08454K

## Description

La présente invention concerne la gestion thermique, notamment pour les technologies qui requièrent une limitation de la montée en température, comme par exemple la régulation en température des composants électroniques. Celle-ci cherche à limiter efficacement l'augmentation de la température des composants pendant leur utilisation en fonctionnement transitoire, tout en occupant un espace minimal avec un poids réduit et sans court-circuiter les circuits.
La compacité grandissante de l'électronique rend la problématique de la gestion thermique de plus en plus cruciale. La miniaturisation de l'électronique demande aux techniques de gestion de la chaleur d'être compactes et peu couteuses en énergie. La problématique est donc de trouver un moyen de limiter l'élévation de température des composants pendant leur utilisation, afin de garantir leur fonctionnement optimal, et d'autre part de pouvoir stocker et restituer efficacement la chaleur, en particulier dans le cas d'environnements confinés. Ceci, sans endommager les composants, en limitant le poids final et en garantissant un encombrement minimum.

La solution la plus répandue pour le refroidissement est l'utilisation d'un puits thermique métallique massif mais celui-ci est en général encombrant et de masse non négligeable par rapport à celle de l'électronique. De plus sa capacité à évacuer la chaleur est limitée. Aussi, pour faciliter l'extraction de la chaleur, des matériaux d'interface thermique sont utilisés afin de réduire toutes résistances thermiques de contact entre la source de chaleur et le dissipateur. Ces matériaux sont en général des pâtes ou colles qui permettent une excellente conformité avec les composants. Toutefois, ceux-ci ne permettent pas de stocker la chaleur.
Enfin, une autre solution est l'utilisation de matériaux à changement de phase (MCP) permettant d'absorber et de stocker la chaleur pendant la période d'utilisation. En effet, ces matériaux ont la capacité de stocker la chaleur environnante grâce à leur enthalpie de fusion élevée (typiquement autour de 210 J/g), et en absorbant la chaleur ils limitent l'élévation de température de leur environnement. Les MCP sont des composants passifs mais ils possèdent une conductivité thermique faible (0.15-0.25 W/mK), et leur rigidité génère une résistance thermique de contact élevée qui limite leur capacité à absorber la chaleur.

Le premier point peut être amélioré en incorporant un matériau à forte conductivité thermique.
Les premières études pour tenter d'améliorer la conductivité thermique des MCP ont été réalisées dans les années 1980. Depuis plusieurs stratégies ont été mise en œuvre pour essayer d'augmenter leur conductivité thermique sans modifier leurs propriétés de stockage thermique. Ji et al. Energy Environ. Sci., vol. 7, no. 3, pp. 1185-1192, 2014 rapporte les différentes voies d'amélioration de la conductivité des MCP.
Deux stratégies sont exploitées pour améliorer la conductivité thermique des MCP. L'ajout d'additifs diffus, tel que des nanotubes de carbones, des feuilles de graphène, des fibres de carbone permet une amélioration de la conductivité thermique avec un gain rapporté à la fraction volumique de l'additif inférieur à 2. Une meilleure continuité dans les matériaux conducteurs permet d'améliorer ce gain. Les premières études réalisées avec des mousses métalliques ont montré cet intérêt (Aluminium, Carbone, Nickel). Mais là encore, seul un gain maximum de 6 a pu être constaté.
Cependant, le graphite, ainsi que les mousses métalliques sont aussi d'excellents conducteurs électriques ce qui ne permet pas une application directe sur des composants électroniques : l'utilisation de ces matériaux sur des composants électriques pour la gestion thermique risquerait de court-circuiter les systèmes.
Il est donc nécessaire de développer un matériau composite alternatif, à base de MCP et d'un additif présentant une conductivité thermique élevée mais qui permet également de moduler sa conductivité électrique en rendant le composite partiellement conducteur ou isolant électriquement.
Le nitrure de bore (BN) sous forme de poudre a été proposé pour améliorer les propriétés thermiques des MCP. Le BN est un excellent isolant électrique tout en étant un excellent conducteur thermique. En le mélangeant avec un MCP, on augmente la conductivité thermique du MCP et donc sa capacité de stockage, tout en garantissant l'isolation électrique entre les composants. Il est aussi possible de doper ce BN avec du carbone (BN(C)) ce qui permet de rendre légèrement conducteur d'électricité.
Le BN est capable de rivaliser avec les propriétés thermiques du graphène, tout en ayant de plus une résistance électrique très élevée. Sous sa forme 2D, le BN est un matériau inerte chimiquement, avec une stabilité thermique parfaite jusqu'à 1000°C. Sa conductivité thermique, bien que théoriquement inférieure au graphène, reste très élevée (de l'ordre de 2000 W/mK en théorie), comparée au cuivre (400 W/mK) classiquement utilisé.

Ainsi, Jeong et al (Int. J. Heat Mass Transf., vol. 71, pp. 245-250, 2014) ont décrit un remplissage de MCP par de la poudre de BN à 80% en MCP, soit une fraction en BN de 20%. Un gain en conductivité thermique de 477% par rapport à la conductivité thermique du MCP est décrit, ce qui correspond donc à un gain par fraction volumique du BN de 0.24 seulement.
La mousse de BN dopée au carbone (BN(C)) est connue (Loeblein et al, Small, vol.10, 15, 2992-2999, 2014) et a aussi montré sa conductivité thermique élevée, comparable au BN seul Jie Yang ET AL: "An ice-templated assembly strategy to construct graphene oxide/boron nitride hybrid porous scaffolds in phase change materials with enhanced thermal conductivity and shape stability for light-thermal-electric energy conversion",Journal of Materials Chemistry A, vol. 4, no. 48, 9 novembre 2016 (2016-11-09), pages 18841-18851, décrit une mousse composite BN(C) comprenant du graphène et imprégnée d'un matériau à changement de phase MCP pour le stockage de la chaleur. Il reste donc à mettre à disposition un composite amélioré permettant un gain accru de la conductivité thermique.

Ainsi, il est proposé selon l'invention un matériau composite selon la revendication 1.

Le matériau composite selon l'invention à base de MCP et de structure continue de BN éventuellement carbonée, est tel que le MCP est incorporé dans les interstices, tel que les pores de ladite structure continue, et est caractérisé en ce que ledit composite comprend au moins sous une face une portion d'épaisseur E non nulle dénuée de MCP. Le matériau possède donc au moins une couche sous tout ou partie d'une de ses faces, qui est dénuée de MCP.
La « structure continue de BN(C) » fait référence à tout matériau poreux constitué de BN, de structure 3D continue, non dispersée, éventuellement carbonée (i.e.) dopée par du carbone : elle est alors qualifiée ici de BNC. A titre de structure continue, une mousse est utilisée selon l'invention. Les mousses de BN(C) et leur procédé de fabrication sont décrites par Loeblein et al, Small, vol.10, 15, 2992-2999, 2014.
Typiquement, la mousse de BN(C) peut être réalisée par croissance CVD sur un squelette métallique de cuivre ou de nickel. Après la croissance du BN(C), la mousse est enduite d'un polymère tel que le PMMA pour garantir sa stabilité puis, elle est plongée dans un bain d'acide pour retirer le squelette métallique. La mousse de BN seul, est obtenue en gravant le polymère.
La mousse de BN(C) peut être renforcée, par exemple en effectuant une croissance longue, ou plusieurs croissances pour augmenter l'épaisseur de BN(C) ou en conservant le PMMA sur la mousse (avec une épaisseur de PMMA suffisamment fine pour maintenir la conductivité thermique désirée, le PMMA ayant une conductivité thermique faible 0.2 W/mK), et/ou en ajoutant des additifs pour augmenter la conductivité thermique Généralement, la structure continue de BN(C) peut comprendre entre 5 et 80 % de carbone (en poids). Ce pourcentage dépend des applications envisagées. La teneur en carbone peut notamment être modulée de façon uniforme ou localement pour faire varier les propriétés électriques, par exemple augmenter la conductivité électrique sur l'ensemble de la structure ou sur certaines zones, typiquement dans des applications telles que la protection électromagnétique des composants électroniques.

Selon un mode de réalisation, la structure continue de BN(C) présente une densité comprise entre 1 et 5 mg/cm³, et une porosité comprise entre 5 et 120 pores par pouce. La conductivité thermique de la structure continue est généralement supérieure à la conductivité thermique du MCP.

Le terme « face » désigné ici s'entend comme une surface extérieure du matériau composite.
La « portion superficielle » ou « portion » correspond à au moins une partie de la face destinée à être en contact avec l'électronique lorsque le matériau composite est appliqué à un composant. Ladite portion peut correspondre à tout ou partie de la face du composite, étant entendu que la portion comprend la partie de la face sous laquelle elle est située, ainsi que la couche d'épaisseur E immédiatement située sous cette partie de la face. Dans cette portion, la structure continue est dénuée de MCP.
Le matériau composite comprend donc au moins une portion superficielle, d'épaisseur E sous tout ou partie de la face, telle qu'au sein de ladite portion, la structure continue est dénuée de MCP.

Selon un premier mode de réalisation, ledit matériau comprend une face inférieure et une face supérieure, et sous chacune des deux faces au moins une portion superficielle de structure continue dénuée de MCP, présentant ainsi une couche de MCP+BN(C) en sandwich entre deux couches de BN(C) dénuée de MCP. Autrement dit, une couche de BN(C) dénuée de MCP est présente sous chaque face inférieure et supérieure.

Selon un deuxième mode de réalisation, ledit matériau comprend une face inférieure, une face supérieure et au moins une face latérale, et sous chacune de ces faces une portion superficielle de structure continue de BN(C) dénuée de MCP, présentant ainsi un volume intérieur de MCP+BN(C) entouré sur toutes les faces d'une couche de BN(C) dénué de MCP. Autrement dit, une couche de BN(C) dénuée de MCP est présente sous les faces inférieures, supérieures et latérales.

Pour un matériau composite donné, l'épaisseur des portions de BN(C) dénuées de MCP peut être identique ou différente pour chaque face.

Généralement, l'épaisseur de ladite portion est substantiellement inférieure à l'épaisseur du composite. Typiquement, l'épaisseur E peut être adaptée en fonction de la rugosité du matériau sur lequel le matériau composite sera appliqué. Elle est en générale d'épaisseur au moins égale au diamètre d'un pore de la structure continue. L'épaisseur E doit être suffisante pour minimiser la résistance de contact et réaliser la conduction thermique nécessaire. L'épaisseur de l'ensemble de la structure est généralement limitée en raison des impératifs de poids et d'encombrement des composants électrique. On peut par exemple citer une épaisseur E supérieure à 250 µm, notamment pour une structure continue de très haute porosité.
L'épaisseur E peut être contrôlée par le procédé de fabrication du matériau composite.

La portion de structure continue dénuée de MCP est donc constituée de structure continue de BN(C) qui permet d'assurer un bon contact avec l'électronique et ainsi de garantir une bonne conduction thermique du circuit vers le composite tout en contrôlant l'impact électrique du composite sur le reste du circuit.
La structure continue telle que la mousse de BN(C) étant flexible, elle peut s'adapter à la rugosité de surface du composant électronique et réduire la présence de poches d'air, réduisant ainsi la résistance thermique de contact. Elle peut aussi endurer les changements de phase du MCP qui a généralement une expansion de phase de 10 à 15%.
De plus, la structure continue telle que la mousse de BN(C) présente l'avantage d'avoir une densité extrêmement faible, ce qui permet de conserver la capacité de stockage du MCP à poids constant. Le BN(C) est un matériau inerte chimiquement, il permet donc de réaliser la passivation/protection des composants électroniques face à l'environnement. Ceci permet d'utiliser le composé directement sur l'électronique et d'améliorer l'absorption de la chaleur.

On entend par MCP, tout matériau capable d'effectuer une transition de phase à une température (ou plage de température restreinte) et de stocker et éventuellement céder de l'énergie lors de cette transition. Lors de la transition de phase, la température du MCP reste constante. Les MCP selon à l'invention impliquent une transition de phase solide/solide ou solide/liquide.
Pour assurer un stockage thermique optimal, ils possèdent typiquement une densité d'énergie latente de fusion au moins égale à 50 J/g.
Selon un mode de réalisation, les MCP peuvent être choisis parmi les MCP de type polymères, organiques, organométalliques, inorganiques ou eutectiques.
A titre de MCP, on peut notamment citer les MCP choisis parmi les MCP commercialisés par RUBITHERM, le Polywax polyethylene (commercialisé par Baker Hughes), le Puretemp (commercialisé par Puretemp), la paraffine, l'érythritol.
Le choix du MCP dépend de la température maximale autorisée par l'utilisation considérée. On choisira typiquement un MCP dont la température de transition de phase est inférieure ou égale à la température maximale autorisée.
Le matériau composite selon l'invention présente donc les avantages suivants :
- très bonne conformabilité avec la surface à réguler thermiquement
- versatilité : la température de changement de phase peut être modulée entre 50 et 200°C, en modifiant le MCP ;
- capacité de stockage thermique facilement élevée;
- conductivité thermique améliorée par rapport à celle du MCP (le gain rapporté à la fraction volumique en BN(C) peut atteindre 10) ;
- isolation électrique adaptable globalement ou spatialement, pour ne pas perturber les systèmes électroniques ;
- inerte et stable chimiquement, n'émettant pas de gaz en condition normale de fonctionnement, permettant d'éviter toutes réactions avec l'environnement ;
- de densité faible, permettant de limiter le poids du système ;
- de résistance thermique de contact faible, permettant d'assurer la bonne absorption de la chaleur du composant électrique.
Selon un autre objet, la présente invention concerne également le procédé de préparation dudit matériau composite.
Selon l'invention, le procédé comprend l'infusion du MCP sous forme liquide dans la structure continue de BN(C), et la protection/déprotection de la ou des portions superficielles, et/ou le retrait du MCP au sein de la ou des portions superficielles.

Selon un premier mode de réalisation, ledit procédé comprend les étapes selon la revendication 6.

La protection peut être effectuée par imprégnation d'un matériau protecteur dans l'épaisseur de ladite portion superficielle.

Cette imprégnation peut être réalisée par toute méthode permettant d'appliquer en surface et dans l'épaisseur d'une matrice un matériau liquide. La méthode d'application dépend de la nature du matériau et de sa viscosité, et de la matrice.
Selon un mode de réalisation, l'imprégnation est réalisée par infusion, à chaud. L'infusion peut être réalisée par dépôt ou trempage de la portion superficielle de la structure continue de BN(C) à protéger sur ou dans une solution du matériau protecteur. Généralement, cette imprégnation est réalisée à température supérieure à la température de fusion du matériau protecteur, de sorte qu'il soit sous forme liquide avec une viscosité adaptée à l'épaisseur désirée.
Le matériau protecteur est choisi de telle façon qu'il puisse être :
- imprégné à l'état liquide,
- maintenu à l'état solide lors de l'imprégnation du MCP à l'état liquide, et/ou
- déprotégé sélectivement du composite formé.

Selon l'invention, le matériau protecteur présente une température de fusion supérieure à celle du MCP ou une vitesse de gravure différente de celle du MCP. Typiquement, le matériau protecteur est un polymère, éventuellement dilué dans un solvant pour ajuster la viscosité du matériau protecteur à la nature de la structure continue de BN(C) et de l'épaisseur désirée.

Selon un mode de réalisation, le matériau protecteur peut être choisi notamment parmi le polyéthylèneoxyde (PEO) avec l'eau ou l'isopropanol (IPA) comme solvant, le polyfluorure de vinylidène (PVDF) avec le diméthylacétamide (DMA) ou le N,N-diméthylformamide (DMF) comme solvant, le néopentylglycol (NPG) avec l'eau comme solvant.
Selon un mode de réalisation, on utilise à titre de matériau protecteur le PEO, dilué dans l'eau, avec un taux de dilution compris entre 10 et 50%, notamment entre 20 et 25%.
Le PEO est un polymère très commun et qui ne pose pas de problème particulier en termes de manipulation et de stockage. Son solvant est l'eau, qui présente l'avantage d'un coût faible et d'une manipulation et stockage là encore aisée.

Le matériau protecteur peut être dégazé préalablement à son utilisation, pour supprimer les bulles d'air et permettre ainsi une meilleure imprégnation.
Lorsque la protection est réalisée par un matériau protecteur à l'état liquide, le procédé comprend l'étape intermédiaire de fixation du matériau protecteur sur la structure continue, par augmentation de la viscosité du matériau protecteur par exemple par évaporation du solvant par exemple.

L'étape de protection peut être réalisée autant de fois que nécessaire en fonction du nombre de portions superficielles à protéger, avant l'étape d'imprégnation du MCP.

L'imprégnation de la structure continue de BN(C) par le MCP est réalisée avec un MCP liquide, après protection de la ou des portions superficielles à protéger.
L'étape d'imprégnation est conduite à une température supérieure à la température de fusion du MCP.
Typiquement, le matériau protecteur doit posséder soit une température de fusion supérieure à la température de fusion du MCP, soit si le matériau protecteur a une température de fusion inférieure, avoir une durée de fusion lorsqu'il est plongé dans le MCP liquide, très supérieure au temps d'infusion du MCP dans la structure continue non protégée. De plus, typiquement, le matériau protecteur ne doit pas être attaqué chimiquement par le MCP sous forme liquide.

Au besoin, il est possible de refroidir localement les portions superficielles avec le matériau protecteur pendant l'imprégnation du MCP.
L'imprégnation du MCP peut être réalisée par trempage de la totalité de la structure continue protégée dans une solution de MCP.
La déprotection peut être effectuée notamment par dégradation sélective du matériau protecteur, par exemple par voie chimique, typiquement par action d'un solvant de déprotection dans lequel le matériau protecteur est soluble. Ceci peut être réalisé par trempage de la totalité de la structure continue protégée dans un bain du solvant considéré.
A titre de solvant de déprotection, on peut citer les solvants des matériaux protecteurs cités plus hauts.

Généralement, le procédé comprend en outre l'étape intermédiaire de fixation du MCP sur la structure continue, par diminution de la température pour faire passer le MCP à l'état solide, préalablement à l'étape de déprotection. Cette étape peut être réalisée dans des moules de formes variées pour s'adapter au packaging et à l'application.

Cette alternative du procédé selon l'invention permet avantageusement de préparer un composite de type « sandwich », présentant pour deux de ses faces opposées des portions de BN(C) dénuées de MCP, comme décrit plus haut selon un premier mode de réalisation.

Selon un deuxième mode de réalisation, le procédé comprend le retrait de MCP imprégné dans la structure de BN(C) au sein de la ou des portions superficielles.
A la différence du premier procédé, ce mode de réalisation ne nécessite pas d'étape de protection de ladite portion superficielle.
Ainsi, le procédé selon ce deuxième mode de réalisation comprend les étapes suivantes :
- L'imprégnation de la structure continue de BN(C) (1) par un MCP (5) sous forme liquide ;
- - La gravure sélective du MCP au sein d'une ou plusieurs portions superficielles.

Tel qu'utilisé ici, le terme « gravure » désigne la gravure chimique, qui peut être réalisée par immersion dans un bain de solvant de gravure. Le solvant de gravure est un solvant permettant de dissoudre le MCP et qui n'endommage pas la structure continue de BN(C) pendant la gravure.
On peut ainsi citer l'éthanol, l'isopropanol (IPA), l'acétone, le toluène, le xylène, l'huile végétale à titre de solvant de gravure.

La température de la solution de gravure permet de contrôler la vitesse de gravure. En effet, plus la température va être élevée plus la vitesse de gravure va être rapide. Le bain contient généralement suffisamment de solvant pour éviter la saturation du solvant en MCP et ainsi éviter les re-dépots de MCP.

La gravure est typiquement conduite à une température inférieure à la température d'ébullition du bain et également inférieure à celle de fusion du MCP, pour éviter une liquéfaction du MCP.

Typiquement, dans le cas d'utilisation d'éthanol avec un MCP ayant une température de fusion de 90°C, la température de gravure se situe entre 50 et 80°C suivant la vitesse de gravure désirée

L'arrêt de la gravure peut être effectué en retirant le composite du bain de gravure.

A l'issue de la gravure, on peut effectuer une étape de rinçage, généralement réalisée en trempant le composite dans un ou plusieurs bains d'éthanol à la même température que le bain de gravure.
Puis un séchage peut être réalisé, par exemple sur plaque chauffante ou encore dans un four à une température inférieure à la température de fusion du MCP.

Cette alternative du procédé de l'invention permet avantageusement de préparer un composite présentant sous toutes ses faces des portions dénuées de MCP.

Selon un troisième mode de réalisation, le procédé combine au moins une étape de protection et au moins une étape de gravure du MCP. Ce mode de réalisation permet de réaliser des portions superficielles d'épaisseurs différentes.
Le procédé comprend alors les étapes suivantes :
- La protection préalable d'au moins une portion superficielle (1') de la structure continue de BN(C) (1) par un matériau protecteur ayant une vitesse de gravure différente que celle du MCP ;
- L'imprégnation de la structure continue de BN(C) (1) par un MCP (5) sous forme liquide ;
- La gravure du MCP et du matériau protecteur par immersion du matériau dans un solvant de gravure.

L'anisotropie de la gravure peut être contrôlée en utilisant un matériau protecteur avec une vitesse de gravure différente de celle du MCP pour le bain chimique de gravure utilisé. Par exemple, préalablement à l'étape d'infusion du MCP dans la structure continue de BN(C), une portion superficielle de la structure continue de BN(C) peut être infusée par un matériau protecteur, typiquement du NPG à l'état liquide à une température supérieure à la température de fusion du MCP. Après solidification du NPG, le MCP est infusé à l'état liquide à une température comprise entre la température de fusion du MCP et celle du NPG. Ensuite, le composite est gravé par la solution de gravure. Comme la vitesse de gravure du matériau protecteur est différente de celle du MCP, il en résulte une portion superficielle dénuée de MCP d'épaisseur différente suivant que la portion avait été imprégnée de matériau protecteur ou de MCP. Au besoin, la ou les portions comprenant encore du matériau protecteur peuvent être déprotégées comme explicité plus haut.

Avantageusement, le solvant de gravure du MCP permet également la déprotection/gravure du matériau protecteur.
Par exemple, pour un bain d'éthanol à 60°C la gravure du NPG est presque instantanée alors que celle du MCP est de l'ordre de 10 µm par minute. Toute la zone qui a été infusée par le NPG, qui peut être de plusieurs millimètres, est alors libérée sans que les zones non protégées aient pu être gravées de façon significative.

Le matériau ainsi formé par cette alternative présentent une structure continue de BN(C) dans laquelle est incorporée le MCP (5), à l'exception de ladite portion superficielle (1'), dénuée de MCP et des autres surfaces où le MCP a été gravé, étant entendu que des portions superficielles d'épaisseurs différentes peuvent être réalisées, suivant que les dites portions ont été protégées ou non.

Cette deuxième alternative de procédé selon l'invention permet avantageusement de préparer un composite selon le deuxième mode de réalisation décrit plus haut, présentant sous l'ensemble de ses faces inférieures, supérieures et latérales des portions superficielles de BN(C) dénuées de MCP, délimitant ainsi un volume intérieur constitué de BN(C) et de MCP.

Le procédé selon l'invention peut également comprendre à titre préalable la préparation de la structure continue de BN(C).
La mousse de BN(C) peut être préparée par application ou adaptation de la méthodologie décrite par Loeblein et al., Small, vol.10, n.15, 2992-2999, 2014.
Ainsi, la mousse de BN(C) peut être notamment préparée par croissance CVD (dépôt chimique en phase vapeur) sur un squelette métallique à base de cuivre ou de nickel par exemple. Après la croissance du BN(C), la mousse est enduite d'un polymère tel que le PMMA pour garantir sa stabilité, puis elle est plongée dans un bain d'acide pour retirer le squelette métallique. La mousse de BN(C) est ensuite obtenue en retirant le polymère ou, selon une variante, la PMMA peut être au moins partiellement conservé pour augmenter la solidité de la mousse.

Le matériau composite ainsi formé peut être appliqué sur un composant électronique.
La présente invention concerne donc un composant électronique comprenant un composite selon l'invention, notamment tel que le composite est appliqué sur sa face dénuée de MCP en contact avec le composant.
Généralement, le choix du MCP est tel que la température de fusion du MCP est inférieure ou égale à la température maximale de fonctionnement du composant.

La mousse de BN(C) possède une conductivité thermique élevée et est flexible/conformable. En se compressant elle comble tous les trous d'air et réduit la résistance thermique de contact. Ceci permet d'améliorer la transmission de la chaleur du composant électronique vers le MCP. De plus, la continuité de la mousse permet de diffuser cette chaleur vers le MCP pour ensuite la stoker. Aussi, la variation de la quantité de carbone dans la mousse de BN(C) de façon globale ou localisée, permet de rendre celle-ci compatible avec l'électronique sur lequel elle est appliquée. Ceci permet de mettre le MCP au plus près des points chauds.

Selon un autre objet, la présente invention concerne également le procédé de fabrication d'un composant électronique comprenant un composite selon l'invention

Ceci peut être réalisée par toute méthode habituelle par exemple par compression du composite, par exemple par encapsulation du composite dans de l'aluminium ou un autre encapsulant non métallique.

L'invention et ses avantages seront mieux compris à l'étude de la description qui va suivre, donnée uniquement à titre d'exemple, et faite en référence aux dessins annexés, sur lesquels :
- les Figures 1 à 6 représentent des schémas illustratifs des étapes de fabrication d'un matériau composite selon l'invention selon le premier mode de réalisation ;
- Les Figures 7 à 9 représentent des schémas illustratifs des étapes de fabrication d'un matériau composite selon l'invention, selon le deuxième mode de réalisation ; et
- les Figures 10 et 11 représentent des schémas illustratifs des étapes de fabrication d'un composant électronique comprenant un matériau composite selon l'invention.

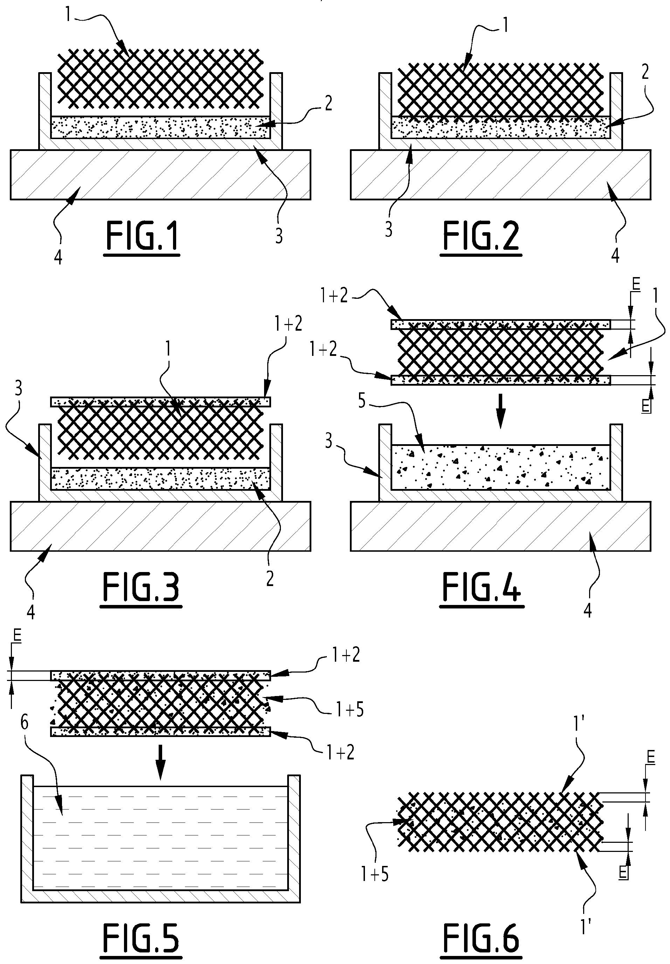

Comme illustré sur les Figures 1 à 6, selon un premier mode de réalisation, le matériau composite selon l'invention peut être préparé en plusieurs étapes de protection/déprotection, détaillées ci-après.

La fabrication du composite comprend la réalisation de la mousse de BN(C) 1, puis la protection de portions superficielles 1' de la mousse 1 par un matériau protecteur 2 (Figures 1 à 3), afin d'éviter la présence de MCP 5 en surface, puis l'infusion du MCP 5 dans la mousse 1 (Figure 4) et finalement le retrait de la protection 2 (Figure 5) pour libérer la mousse des portions superficielles 1'.

Plus précisément, comme illustré sur les Figures 1 et 2, un matériau protecteur 2 tel qu'un polymère en solution dans un solvant est préparé afin d'afin d'obtenir la viscosité voulue (qui influe sur l'épaisseur E de la portion superficielle 1' de la mousse imprégnée par ledit matériau 2) et limiter la présence de bulles lors de sa solidification. En effet, les bulles rendraient le matériau 2 fragile par endroit et autoriseraient la pénétration du MCP 5 liquide. Cette viscosité dépend du polymère ainsi que de son taux de dilution dans un solvant.

Ensuite, le matériau protecteur 2 est déposé dans un récipient 3 (Figure 1) et la mousse de BN(C) 1 est déposée sur ledit matériau 2 (Figure 2). Le tout est chauffé par exemple sur une plaque chauffante 4, jusqu'à ce que le matériau 2 forme une fine couche en surface de la mousse 1. L'épaisseur E de la portion superficielle 1' protégée peut être contrôlée grâce à la viscosité du matériau 2.

En option, et comme représentée à la Figure 3, cette opération peut être réalisée de la même façon sur une autre face de la mousse de BN(C).

Comme illustré sur la Figure 4, une fois que chaque face sur laquelle on souhaite préserver une portion superficielle 1' dépourvue de MCP est protégée, le MCP 5 est chauffé pour passer à l'état liquide. La mousse 1 protégée est plongée dans un bain du MCP 5. On laisse le MCP 5 infuser seulement le cœur de la mousse 1 puis on retire la mousse ainsi imprégnée du bain de MCP 5. Le matériau composite obtenu est laissé à refroidir pour que le MCP 5 passe à l'état solide. La forme du moule pour le MCP est arbitrairement carrée sur les schémas, mais celle-ci peut être modifiée pour s'adapter aux contraintes du packaging et de l'application.

Enfin, comme illustré sur la Figure 6 on plonge le matériau composite dans un bain de solvant 6 du matériau protecteur 2, de façon à solubiliser le matériau 2, libérant ainsi chaque portion superficielle 1' du matériau 2.

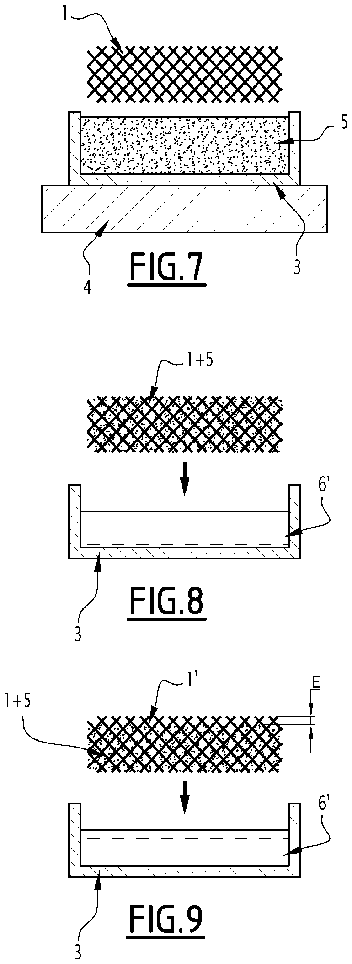

Comme illustré sur les figures 7 à 9, selon le deuxième mode de réalisation du procédé selon l'invention, le matériau composite selon l'invention peut être préparé par gravure sélective de MCP.

La fabrication du composite comprend tout d'abord l'immersion de la structure continue de BN(C) dans un bain de MCP 5 contenu dans un récipient 3 placé sur une plaque chauffante 4. L'immersion est réalisée en totalité selon le deuxième mode de réalisation (Figure 7). Puis le matériau est extrait du bain : il est alors constitué de la structure de BN(C) imprégnée sur toute son épaisseur de MCP 5. Les portions superficielles du matériau ainsi obtenu sont alors trempées dans un bain d'une solution de gravure 6', permettant de dissoudre le MCP sur les portions immergées. Les faces inférieures et supérieures peuvent ainsi être immergées successivement, pour dégager deux portions superficielles 1' inférieures et supérieures de BN(C) dénuées de MCP. Selon une variante de ce mode de réalisation, le matériau peut être complètement immergé, ceci aboutissant à ce que toutes les portions superficielles soient dégagées de MCP, sous toutes les faces du matériau.

Un troisième mode de réalisation peut être représenté en combinant les étapes des Figures 1-6 et 7-9.

Le matériau composite ainsi formé peut ensuite être appliqué sur un composant électronique.

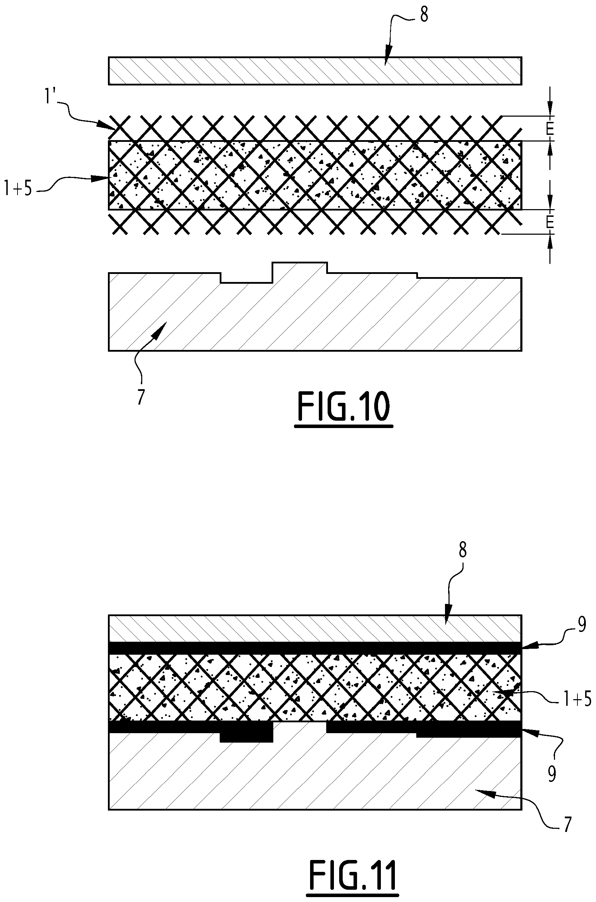

Selon une variante représentée à la Figure 10, le matériau composite est encapsulé entre un capot d'aluminium 8 et un composant électronique 7, tel que par exemple un processeur.

Le composant 7 présente un relief irrégulier en surface. Par compression, les portions superficielles 1' du matériau composite comblent les cavités et épousent les rugosités du composant 7.

Ainsi, comme illustré la Figure 11, les portions superficielles 1' comprimées forment des couches 9 de BN(C) qui sont en contact avec le composant 7 d'une part et le capot 8 d'autre part. Ceci assure une isolation électrique, la passivation du composant et la réduction de la résistance thermique de contact.

Les exemples suivants illustrent la présente invention de façon non limitative.

### Exemple 1 : Préparation de la mousse de BN(C)

Une mousse de BN a été préparée par application de la méthodologie décrite par Loeblein et al., Small, vol.10, n.15, 2992-2999, 2014, sans réaliser l'étape de croissance du carbone. Du PMMA est déposé juste avant la gravure du nickel afin de renforcer mécaniquement le BN. Le PMMA peut être retiré ou conservé après gravure du Nickel.

### Exemple 2 : préparation du composite

### Stratégie

Pour réaliser la mousse de BNC infusée par le MCP (Matériau à changement de phase) uniquement en son centre et pas en surface, la première stratégie est d'utiliser un matériau qui va protéger les surfaces de la mousse pendant l'infusion. Ce matériau protecteur sera ensuite retiré.

### Protection des faces de la mousse

Le PEO (Polyéthylène Oxyde) a été utilisé à titre de matériau protecteur. Dans un premier temps, celui-ci est dilué dans de l'eau dans des proportions qui permettent d'obtenir un polymère avec une viscosité adéquate, ici entre 20 et 25% de PEO.
En deuxième étape, le polymère dilué est entreposé sous vide à environ 2.5 mTorr pendant 30 min. Le but de cette étape de « dégazage », est de retirer les bulles d'air qui ont été piégées dans le polymère pendant le mélange. Sans cette étape, pendant la phase de densification des bulles d'air pourraient se former, endommager la mousse et compromettre l'uniformité de l'épaisseur du polymère.
Troisième étape, le polymère est déposé dans un moule en aluminium. La quantité de polymère va dépendre des dimensions du moule, afin d'avoir une épaisseur de polymère d'environ 3 mm Ensuite la mousse est déposée sur le polymère qui va légèrement le pénétrer. La profondeur de pénétration va dépendre de la viscosité du polymère. Enfin, le moule est déposé sur une plaque chauffante, afin de densifier le polymère en évaporant le solvant (ici l'eau) de façon progressive. Il a été établit expérimentalement qu'une étape de 80 °C pendant 40 min puis une élévation de 5 °C toute les 5 min pour atteindre 120 °C est favorable. Toutefois, ces températures et temps dépendent de la sonde de température de la plaque chauffante ainsi que de l'environnement du laboratoire car tout est fait sous air.
Quatrième étape, la mousse avec une face protégée est retirée du moule. Une des faces est perforée à l'aide d'une aiguille. Ces perforations ont pour but d'aider à l'infusion du MCP par la suite et n'endommagent que très peu la mousse.
La cinquième étape est identique à la troisième mais sur la face opposée de la mousse.

### L'infusion du MCP dans la mousse protégée

La paraffine a été utilisée à titre de MCP.

La paraffine est chauffée à 110 °C, c'est-à-dire légèrement au-dessus de la température de fusion de 90 °C de la paraffine, dans le moule en aluminium. Une fois la paraffine en phase liquide, la mousse avec les deux faces protégée y est plongée : la paraffine s'infiltre sur les côtés mais aussi par la face perforée qui est gardée au-dessus. La mousse reste entre 3 et 5 min dans le MCP pour s'assurer que l'infusion soit complète, tout en évitant la fusion du polymère de protection. Enfin celui-ci est mis à refroidir, naturellement ou dans un frigidaire pour accélérer le refroidissement.

### Le retrait du polymère de protection

Pour retirer le polymère, on plonge la mousse protégée dans de l'eau à température ambiante. Le composé est maintenu à la verticale (pour ne pas endommager les surfaces) dans un bêcher d'eau pendant une nuit. On renouvelle le bain d'eau et on laisse agir pendant une nuit supplémentaire pour améliorer la déprotection en fonction de l'épaisseur du polymère ainsi que de la taille de l'échantillon et la quantité d'eau. Enfin, l'échantillon est mis à sécher.

### Exemple 3 : caractérisations/performance du composite

### Caractérisations thermiques :

- Mesure de la densité du composé final. Afin de montrer que la mousse ne modifie que très peu le poids du MCP seul.
- Mesure de l'énergie latente de fusion du composé. Pour la même raison, qui est de montrer le faible impact de la mousse sur la capacité de stockage thermique du MCP. On cherche à conserver l'énergie latente de fusion du MCP.
- Mesure de la conductivité thermique afin de montrer l'apport et l'intérêt de la mousse.
- Mesure de résistance de contact pour vérifier la capacité du composé à se conformer aux surfaces.

### Caractérisations électriques

- Evaluer la conductivité électrique du composé pour confirmer son aspect isolant pour le BN(C) pur, et légèrement conducteur pour le BNC. De même pour la validation des zones isolantes ou légèrement conductrices dans le cas d'un dopage localisé.
- Mesures Radiofréquences (pertes, transmissions) pour connaitre l'impact de la présence du composé dans un environnement électronique.

### Caractérisations physiques

- Coefficient d'expansion thermique du composé pour le futur design du packaging.
- Résistance mécanique en compression et tension
- Visualisation de la conformabilité de la mousse libérée en surface.

### Exemple 4 : Préparation du composite sans matériau de protection, par gravure.

Pour ce procédé, la structure continue de BN(C) est d'abord infusée par le MCP en phase liquide à une température supérieure à la température de fusion du MCP. Ensuite, le composé obtenu est plongé dans un bain d'éthanol à 65°C, permettant une gravure sélective du MCP par rapport à la structure continue. Chaque face du MCP est gravée à une vitesse d'environ 5 µm/min. Une heure de bain permet de libérer environ 300 µm de portion superficielle sur chaque face du composé. Ensuite, le composé est plongé successivement dans plusieurs bains d'éthanol à 65°C pendant quelques minutes pour retirer les re-dépôts de MCP sur les portions superficielles. Enfin le composé est séché dans un four à 50°C pendant 1 heure.

### Exemple 5 : Préparation du composite avec matériau de protection et par gravure.

Ce procédé combine les deux préparations précédentes afin de pouvoir réaliser des portions superficielles d'épaisseurs différentes.
Tout d'abord, la structure continue de BN(C) est infusée en surface par du NPG liquide à une température d'environ 130°C sur plaque chauffante. Typiquement le NPG infuse la structure continue sur une épaisseur de 1 à 2 mm. Cette étape est répétée sur les deux faces opposées de la structure. Ensuite la structure ainsi protégée est plongée dans le MCP liquide à 110°C car sa température de fusion est de 90°C pour cet exemple. Après infusion du MCP et solidification de celui-ci, le composé est plongé dans un bain d'éthanol à 65°C. Le NPG est dissous quasi instantanément sur les deux faces protégées libérant la portion superficielle sur une épaisseur de 1 à 2 mm sur ces faces, les autres faces sont gravées à une vitesse d'environ 5 µm/min. Ceci permet d'avoir des portions superficielles d'épaisseur différentes.

### Exemple 6 : fabrication d'un composant comprenant le composite

L'invention peut être appliquée dans le cas d'un transistor de puissance, dissipant par exemple 20 W, lors d'une utilisation cyclique, par exemple pour un fonctionnement continu inférieur à 15 min, avec 15 min de refroidissement. Le MCP est choisi en fonction de la température maximale critique du transistor : la température de fusion du MCP doit être égale ou inférieure à celle de la température critique du transistor. Le matériau selon l'invention est appliqué directement sur le transistor, avec une des faces dénudée du MCP en contact avec le transistor pour assurer le bon contact thermique. Une encapsulation est réalisée autour du MCP ainsi qu'à la base du processeur pour assurer l'étanchéité.

## Revendications

1. Matériau composite comprenant :
- Du nitrure de bore éventuellement dopé par du carbone (BN(C)) sous forme de structure continue (1), tel que la structure continue de BN(C) est une mousse de BN(C); et un matériau à changement de phase (MCP) (5) incorporé au sein de ladite structure continue de BN(C) (1), tel que ledit MCP est choisi parmi les matériaux capables d'effectuer une transition de phase solide/solide ou solide/liquide à une température constante,
ledit matériau composite comprenant au moins une face ;
et **caractérisé en ce que** ledit matériau composite comprend sous tout ou partie de ladite face une portion superficielle (1') constituée de la structure continue de BN(C) (1) dénuée de MCP (5).

2. Matériau composite selon la revendication 1 tel que ladite portion superficielle est une couche d'épaisseur E non nulle sous la totalité de ladite face.

3. Matériau composite selon l'une quelconque des revendications précédentes, tel que la structure continue de BN(C) (1) est une structure continue de BNC.

4. Matériau composite selon l'une quelconque des revendications précédentes, tel que ledit matériau composite comprend une face inférieure et une face supérieure, et tel qu'il comprend sous chacune des deux faces au moins une portion superficielle (1') de la structure continue dénuée de MCP (5).

5. Matériau composite selon l'une quelconque des revendications précédentes, tel que ledit matériau composite comprend une face inférieure, une face supérieure et une ou plusieurs faces latérales, telles qu'une portion superficielle (1') de la structure continue de BN(C) dénuée de MCP (5) est présente sous chacune de ces faces.

6. Procédé de préparation du matériau composite selon l'une quelconque des revendications précédentes, ledit procédé comprenant :
- l'infusion du MCP sous forme liquide dans la structure continue de BN(C) (1), et
- la protection/déprotection de la ou les portions superficielles par un matériau protecteur présentant une température de fusion supérieure à celle du MCP ou une vitesse de gravure différente de celle du MCP, et/ou le retrait du MCP éventuellement infusé au sein de la ou des portions superficielles.

7. Procédé selon la revendication 6 comprenant les étapes suivantes :
- La protection préalable d'au moins une portion superficielle (1') de la structure continue de BN(C) (1) par imprégnation d'un matériau protecteur;
- L'imprégnation de la structure continue de BN(C) (1) par un MCP (5) sous forme liquide ;
- La déprotection sélective de la ou des portions protégées ; Formant ainsi une structure continue de BN(C) dans laquelle est incorporée le MCP (5), à l'exception de la ou des portions superficielles (1'), dénuées de MCP.

8. Procédé selon la revendication 7, tel que l'imprégnation par le MCP (5) est réalisée à une température supérieure à la température de fusion du MCP (5) et soit inférieure à la température de fusion du matériau protecteur, soit pour une température générant une durée de fusion du matériau protecteur inférieur au temps d'infusion du MCP (2).

9. Procédé selon la revendication 7 ou 8, tel que ledit matériau protecteur a une température de fusion supérieure à la température de fusion du MCP.

10. Procédé selon la revendication 6 comprenant les étapes suivantes :
- L'imprégnation de la structure continue de BN(C) (1) par un MCP (5) sous forme liquide ;
- La gravure sélective du MCP au sein d'au moins une portion superficielle (1').

11. Procédé selon la revendication 6 comprenant :
- La protection préalable d'au moins une portion superficielle (1') de la structure continue de BN(C) (1) par un matériau protecteur ayant une vitesse de gravure différente de celle du MCP ;
- L'imprégnation de la structure continue de BN(C) (1) par un MCP (5) sous forme liquide ; et
- La gravure du MCP par immersion de la ou des zones superficielles imprégnées (1') du matériau dans un solvant de gravure.

12. Composant électronique (7) comprenant un matériau composite selon l'une quelconque des revendications 1 à 5.

13. Procédé selon la revendication 6 de fabrication du composant (7) selon la revendication 12 comprenant l'étape d'application du composite sur le composant (7).

## Patentansprüche

1. Verbundwerkstoff, aufweisend:
Bornitrid, das gegebenenfalls dotiert ist mit Kohlenstoff (BN(C)), in Form einer kontinuierlichen Struktur (1), so dass die kontinuierliche BN(C)-Struktur ein BN(C)-Schaum ist, und ein Phasenwechselmaterial (MCP) (5), das in die kontinuierliche BN(C)-Struktur (1) integriert ist, wobei das MCP aus Materialien ausgewählt ist, die in der Lage sind, einen fest/fest- oder fest/flüssig-Phasenübergang bei einer konstanten Temperatur durchzuführen,
wobei das Verbundmaterial mindestens eine Fläche aufweist,
und **dadurch gekennzeichnet, dass** das Verbundmaterial unter der Gesamtheit oder einem Teil der Fläche einen Oberflächenabschnitt (1') aufweist, der aus der kontinuierlichen BN(C)-Struktur (1) frei von MCP (5) gebildet ist.

2. Verbundwerkstoff gemäß Anspruch 1, wobei der Oberflächenabschnitt eine Schicht mit einer Dicke E ungleich Null unter der Gesamtheit der Fläche ist.

3. Verbundwerkstoff gemäß irgendeinem der vorhergehenden Ansprüche, wobei die kontinuierliche BN(C)-Struktur (1) eine kontinuierliche BNC-Struktur ist.

4. Verbundwerkstoff gemäß irgendeinem der vorhergehenden Ansprüche, wobei der Verbundwerkstoff eine untere Fläche und eine obere Fläche aufweist, und wobei er unter jeder der beiden Flächen mindestens einen Oberflächenabschnitt (1') der kontinuierlichen Struktur frei von MCP (5) aufweist.

5. Verbundwerkstoff gemäß irgendeinem der vorhergehenden Ansprüche, wobei der Verbundwerkstoff eine untere Fläche, eine obere Fläche und eine oder mehrere seitliche Flächen aufweist, wobei unter jeder dieser Flächen ein Oberflächenabschnitt (1') der kontinuierlichen BN(C)-Struktur frei von MCP (5) vorhanden ist.

6. Verfahren zur Herstellung des Verbundwerkstoffs gemäß irgendeinem der vorhergehenden Ansprüche, wobei das Verfahren aufweist:
- Infundieren von MCP in flüssiger Form in die kontinuierliche BN(C)-Struktur (1) und
- Schützen/Entschützen des oder der Oberflächenabschnitte durch ein Schutzmaterial, das eine höhere Schmelztemperatur als die des MCP oder eine andere Ätzrate als die des MCP hat, und/oder Entfernen des gegebenenfalls in den oder die Oberflächenabschnitte infundierten MCP.

7. Verfahren gemäß Anspruch 6, aufweisend die folgenden Schritte:
- vorangehendes Schützen mindestens eines Oberflächenabschnitts (1') der kontinuierlichen BN(C)-Struktur (1) durch Imprägnieren mit einem Schutzmaterial,
- Imprägnieren der kontinuierlichen BN(C)-Struktur (1) durch ein MCP (5) in flüssiger Form,
- selektives Entschützen des oder der geschützten Abschnitte,
wobei dadurch eine kontinuierliche BN(C)-Struktur gebildet wird, in die das MCP (5) integriert wird, mit Ausnahme des oder der Oberflächenabschnitte (1'), die frei von MCP sind.

8. Verfahren gemäß Anspruch 7,
wobei das Imprägnieren durch das MCP (5) bei einer Temperatur, die größer ist als die Schmelztemperatur des MCP (5) und entweder kleiner ist als die Schmelztemperatur des Schutzmaterials oder bei einer Temperatur, die eine Schmelzdauer des Schutzmaterials erzeugt, die kleiner ist als die Infusionszeit des MCP (2), durchgeführt wird.

9. Verfahren gemäß Anspruch 7 oder 8,
wobei das Schutzmaterial eine Schmelztemperatur hat, die größer als die Schmelztemperatur des MCP ist.

10. Verfahren gemäß Anspruch 6, aufweisend die folgenden Schritte:
- Imprägnieren der kontinuierlichen BN(C)-Struktur (1) durch ein MCP (5) in flüssiger Form,
- selektives Ätzen des MCP innerhalb mindestens eines Oberflächenabschnitts (1').

11. Verfahren gemäß Anspruch 6, aufweisend:
- vorangehendes Schützen mindestens eines Oberflächenabschnitts (1') der kontinuierlichen BN(C)-Struktur (1) durch ein Schutzmaterial mit einer Ätzrate, die sich von der des MCP unterscheidet,
- Imprägnieren der kontinuierlichen BN(C)-Struktur (1) durch ein MCP (5) in flüssiger Form, und
- Ätzen des MCP durch Eintauchen des oder der mit dem Material imprägnierten Oberflächenbereiche (1') in ein Ätzlösungsmittel.

12. Elektronisches Bauelement (7), aufweisend einen Verbundwerkstoff gemäß irgendeinem der Ansprüche 1 bis 5.

13. Verfahren gemäß Anspruch 6 zum Herstellen des Bauelements (7) gemäß Anspruch 12, aufweisend den Schritt des Aufbringens des Verbundwerkstoffs auf das Bauelement (7).

## Claims

1. Composite material comprising:
- Boron nitride optionally carbon-doped BN(C) in the form of a continuous structure (1), such that the continuous BN(C) structure is a BN(C) foam; andA phase change material (PCM) (5) incorporated in said continuous BN(C) structure (1), said PCM being selected from materials capable to involve a solid/solid phase or solid/liquid phase transition at constant temperature,
said composite material comprising at least one face;
and **characterized in that** said composite material, underneath all or part of said face, comprises a surface portion (1') formed of the continuous BN(C) structure (1) free of PCM (5).

2. The composite material according to claim 1 such that said surface portion is a layer of nonzero thickness E underneath the entirety of said face.

3. The composite material according to any of the preceding claims, such that the continuous BN(C) structure (1) is a continuous BNC structure.

4. The composite material according to any of the preceding claims, such that said composite material comprises a lower face and an upper face, and such that underneath each of the two faces it comprises at least one surface portion (1') of the continuous structure free of PCM (5).

5. The composite material according to any of the preceding claims, such that the composite material comprises a lower face, an upper face and one or more side faces, such that a surface portion (1') of the continuous BN(C) structure free of PCM (5) is present underneath each of these faces.

6. Method for preparing a composite material according to any of the preceding claims, said method comprising:
- infusion of the PCM in liquid form in the continuous BN(C) structure (1), and
- protection/deprotection of the surface portion(s) by a protective material having a melting temperature higher than that of the PCM or an etching rate different from that of the PCM and/or removal of any PCM optionally infused in the surface portion(s).

7. The method according to claim 6 comprising the following steps:
- Prior protection of at least one surface portion (1') of the continuous BN(C) structure (1) by impregnating a protective material;
- Impregnating the continuous BN(C) structure (1) with a PCM (5) in liquid form;
- Selective deprotection of the protected portion(s);
Thereby forming a continuous BN(C) structure in which the PCM (5) is incorporated, with the exception of the surface portion(s) (1') free of PCM.

8. The method according to claim 7, such that impregnation with the PCM (5) is conducted at a temperature higher than the melting temperature of the PCM (5), and is either lower than the melting temperature of the protective material or at a temperature generating a melting time of the protective material that is less than the infusion time of the PCM (2).

9. The method according to claim 7 or 8, such that said protective material has a melting temperature higher than the melting temperature of the PCM.

10. The method according to claim 6 comprising the following steps:
- Impregnation of the continuous BN(C) structure (1) with a PCM (5) in liquid form;
- Selective etching of the PCM in at least one surface portion (1').

11. The method according to claim 6 comprising:
- Prior protection of at least one surface portion (1') of the continuous BN(C) (1) structure with a protective material having an etch rate differing from that of the PCM;
- Impregnation of the continuous BN(C) (1) structure with a PCM (5) in liquid form; and
- Etching the PCM by immersing the surface area(s) (1') impregnated with the material in an etching solvent.

12. Electronic component (7) comprising a composite material according to any of claims 1 to 5.

13. Method for fabricating the component (7) according to claim 12 comprising the step to apply the composite to the component (7).
